# EUROPEAN PATENT SPECIFICATION

(11) **EP 0 678 830 B1**
(45) Date of publication and mention of the grant of the patent: **17.07.1996**
(21) Application number: 95105062.4
(22) Date of filing: 05.04.1995
(51) Int. Cl.: G06K 19/077, H01R 13/648

(54) **Grounding system for IC cards**
Erdungsanordnung für IC-Karten
Système de mise à la terre pour des cartes de circuit intégré

(30) Priority: 12.04.1994 US 226730
(43) Date of publication of application: 25.10.1995
(73) Proprietor: MOLEX INCORPORATED, Lisle Illinois 60532 (US)
(72) Inventor: Banakis, Emanuel G., Naperville, Illinois 60540 (US); Janota, Kenneth F., Lisle, Illinois 60532 (US); Lang, Harold Keith, Fox River Grove, Illinois 60021 (US)
(74) Representative: Blumbach, Kramer & Partner

(56) References cited:
- EP-A- 0 328 077
- EP-A- 0 532 160
- EP-A- 0 532 166

## Description

### SPECIFICATION

### Field of the Invention

This invention generally relates to the art of IC cards and, particularly, to an improved grounding system for an IC card.

### Background of the Invention

Generally, IC cards or packs, such as memory cards, are data input devices which are electrically connected to an electronic apparatus or storage device, such as a word processor, personal computer or other electronic apparatus. The data stored in the IC card is transferred to the electronic apparatus. Memory cards are portable instruments which are readily inserted and extracted from a connector which may be used with the IC card for removably coupling the IC card to a printed circuit board, for instance.

An IC card may include a frame which usually is generally rectangular and includes an opening in either a top surface or a bottom surface thereof or, in some constructions, in both surfaces. The opening receives a circuit substrate, and a cover closes the opening and encloses the circuit substrate within the frame. In other IC cards, a separate frame is not used, and the circuit substrate simply is sandwiched between a pair of cover members. This assembly is typically held together by an adhesive material.

The IC card conventionally comprises a printed circuit board assembly including a generally planar substrate with at least one electrical component mounted thereon. The electrical component(s) may include semi-conductor devices, integrated circuits, batteries or the like. The components are typically surface mounted to the planar substrate, on one or both sides thereof and, due to the surface mount nature of the components, can be vacuum or robotically "picked and placed" for completely automated assembly of the IC card. Because of its portable nature, it is important for the IC card to remain lightweight and compact. Thus, all components, both structural and electrical, must remain small (i.e. occupying minimal substrate real estate).

Due to the fact that the assembled card generally is a portable instrument and often carried on a human body, one problem typically associated with IC cards involves the build-up of electrical charges during handling. When a card bearing charges is inserted into an electronic apparatus or the connector thereof, the charges flow to the electronic apparatus through the connecting terminals of the connector. The charges, commonly referred to as electrostatic discharge, or ESD, can result in damage to or ultimate failure of the integrated circuits or other circuit elements on the card as well as the electronic apparatus itself.

Consequently, structures have been embodied in IC cards and/or their mating connectors for removing static electrical charges stored in the cards. The card typically includes a grounding circuit which is connected to the ground of the electronic apparatus. For instance, ground clips may be incorporated in an IC card frame and coupled to a grounding circuit location on the edge of the internal circuit substrate. The clip then is exposed at a predetermined location on the outside of the frame to engage a grounding contact within a card-receiving connector at a corresponding location therein. Such configurations, because of the predetermined location of the clip and corresponding ground terminal on the connector, do not allow much flexibility in the design of the circuit substrate in terms of locating the grounding pad on the circuit substrate or locating the grounding area on the finally assembled card. Furthermore, in the case where the cover members are fabricated substantially of conductive material, unless the cover members are electrically coupled to one another and to the grounding circuit, the IC card may act more like an antenna than a shield, and consequently cause further interference with the electrical functioning of the card and the underlying apparatus.

From EP-A-0 532 166 there is for example known an IC memory card which when inserted into a slot of an electronic device, discharges any static electric charge on the card prior to mating of card and device contacts. The card has a frame with opposite sides that have metal clips while the electronic device has grounding terminals which engage the clips as the card is inserted.

The present invention is directed to solving the above problems by providing a simple stamped and formed grounding terminal which is soldered to a ground pad of the internal circuit substrate and resiliently coupled directly to one or both cover members of the IC card, which are at least partially conductive. The grounding terminal provides increased design flexibility by allowing the terminal and the corresponding ground pad to be located anywhere on the circuit substrate. Both cover members of the IC card may be fabricated entirely of metal and thereby provide an enclosure which offers increased EMI capabilities and improved grounding functions. As few as one grounding terminal may be used, or one or two terminals may be used on each side of the substrate to both improve EMI performance and to act as a shock absorber within the IC card assembly. Such a design reduces costs, improves grounding capabilities and increases design flexibility. All of these advantages are not afforded by prior art IC card designs.

### Summary of the Invention

An object, therefore, of the invention is to provide a new and improved IC card of the character described above and including a novel grounding system.

In the exemplary embodiment, the invention is incorporated in an IC card assembly comprising a printed circuit board assembly which includes a generally planar circuit substrate with electrical components mounted thereon. A receptacle connector, having receptacle terminals, is mounted at an edge of the circuit substrate. A pair of cover members sandwich the circuit substrate therebetween and leave at least a mating face of the receptacle connector exposed for connection to an appropriate mating electrical apparatus.

The invention as claimed contemplates that at least a portion of one of the cover members on one side of the circuit substrate be fabricated of conductive material for electrically connecting to a corresponding ground on the mating electrical apparatus. An electrical circuit, including a ground circuit, is provided on the one surface of the circuit substrate, typically via printed conductive traces. A grounding terminal is adapted to electrically connect the ground circuit to the conductive portion of the cover member.

As disclosed herein, the grounding terminal is a stamped and formed sheet metal component in the form of a generally C-shaped spring clip spring loaded between the circuit substrate, and specifically the ground circuit, and the conductive portion of the cover member. The spring clip includes a first end or base portion soldered to the ground circuit, and a second end, defining a contact area, adapted to engage the cover member. The contact area provides a high pressure connection between the substrate and cover. The spring loaded clip may also provide a shock absorbing means for the internal printed circuit board assembly. The grounding terminal may be positioned on the circuit substrate at any point along the ground circuit.

Both cover members may be fabricated substantially entirely of conductive material, and a ground circuit may be printed on each surface of the circuit substrate. One of the grounding terminals is provided between each ground circuit and the respective cover member on the respective surface of the circuit substrate. Again, the grounding terminals are spring clips that are spring loaded between the circuit substrate and the respective cover member to provide shock absorber means for the circuit substrate.

Other objects, features and advantages of the invention will be apparent from the following detailed description taken in connection with the accompanying drawings.

### Brief Description of the Drawings

The features of this invention which are believed to be novel are set forth with particularity in the appended claims. The invention, together with its objects and the advantages thereof, may be best understood by reference to the following description taken in conjunction with the accompanying drawings, in which like reference numerals identify like elements in the figures and in which:
FIGURE 1 is an exploded perspective view of an IC card embodying the concepts of the invention;
FIGURE 2 is an isolated perspective view of one of the grounding terminals secured to a ground circuit on the circuit substrate;
FIGURE 3 is a side elevational view of the grounding terminal of Figure 2, looking in the direction of line 3-3 in Figure 2;
FIGURE 4 is a side elevational view showing two grounding terminals on opposite sides of the circuit substrate, with the terminals spring loaded between the two cover members;
FIGURE 5 is a perspective view of a second embodiment of the grounding terminal;
FIGURE 6 is a side elevational view, of the grounding terminal of Fig. 5;
FIGURE 7 is a perspective view of a third embodiment of the grounding terminal;
FIGURE 8 is a side elevational view of the grounding terminal of Fig. 7;
FIGURE 9 is a perspective view of a fourth embodiment of the grounding terminal; and
FIGURE 10 is a side elevational view of the grounding terminal of Figure 9.

### Detailed Description of the Preferred Embodiment

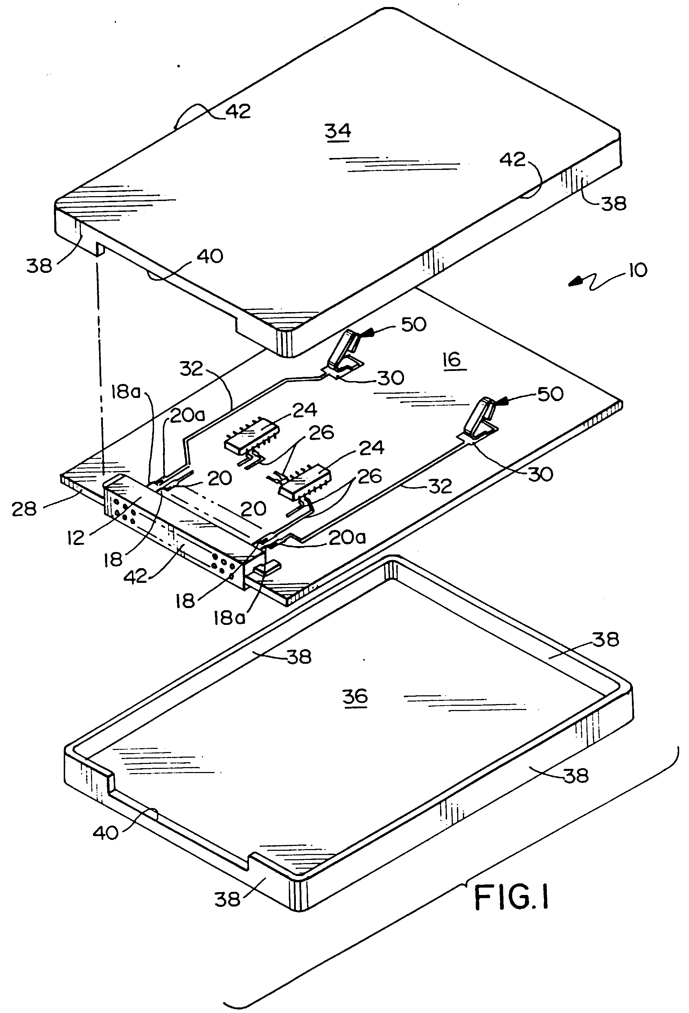

Referring to the drawings in greater detail, and first to Figure 1, the invention is embodied in an IC card assembly, generally designated 10, which is provided as a data input device, such as a memory card, for connection to an electronic apparatus, such as a word processor, personal computer or other electronic apparatus (not shown). The data stored in memory card 10 is transferred to the electronic apparatus through receptacle terminals within elongated receptacle connector 12 which is edge mounted to a circuit substrate, generally designated 16.

Receptacle connector 12 is elongated and mounts a plurality of receptacle input terminals 18. The terminals mechanically and electrically engage contact pads 20 on circuit substrate 16. Receptacle input terminals 18 may include a pair of receptacle ground terminals 18a for electrically coupling to a pair of ground pads 20a, as described in more detail below. Various electrical components or circuit elements 24 are surface mounted on substrate 16, along with circuit traces 26 leading to contact pads 20 located near the leading or front edge 28 of the substrate. This edge is coupled to receptacle connector 12, and the receptacle connector is interconnectable with an electrical connector, such as a header connector, mounted on a printed circuit board of the electronic apparatus to which data stored in the memory card is transferrable. For purposes to be described in greater detail hereinafter, an electrical circuit is provided on the surface of the substrate 16. The electrical circuit includes a ground circuit to ground the substrate to the underlying apparatus. The ground circuit includes a pair of ground pads 30, which may be electrically coupled to ground traces 32, and which may include ground pads 20a to be engageable by ground terminals 18a of receptacle 12. The ground circuit will be described in more detail below.

The above description of circuit substrate 16 is generally conventional, except for the particular ground circuit, and, consequently, the depiction of the circuit substrate is not in complete detail. However, it should be understood that electrical components or circuit elements 24 may comprise semi-conductor devices, batteries, and other parts of integrated circuits from which stored data is transferred to the electronic apparatus.

Still referring to Figure 1, IC card assembly 10 includes a pair of cover members 34 and 36 which sandwich circuit substrate 16 therebetween. The cover members may have integral peripheral flanges 38 which space the panels from circuit substrate 16, along with open areas 40 at the front of the panels for accommodating receptacle connector 12, or the substrate assembly may be accepted within a frame member (not shown) around which cover members are mounted. In either configuration, a mating face 42 of the receptacle is exposed for connection to the corresponding mating electronic apparatus, by way of a header connector or the like. Although the invention contemplates that a portion of cover members 34 and 36 may be of conductive material for engaging the grounding terminal of the invention, described hereinafter, the preferred embodiment of the invention contemplates that cover members 34 and 36 be substantially entirely fabricated of conductive material. This provides a shielding enclosure about the circuit substrate and, therefore, offers increased EMI capabilities.

The invention contemplates the provision of at least one grounding terminal (two are shown in Fig. 1), generally designated 50, which is generally C-shaped and which is secured between the ground pad 30 and at least one of the cover members 34 (36). It should be understood that as few as one grounding terminal 50 may be used on only one side of the circuit substrate, or a plurality of grounding clips may be used on one or both sides of the circuit substrate to improve EMI performance.

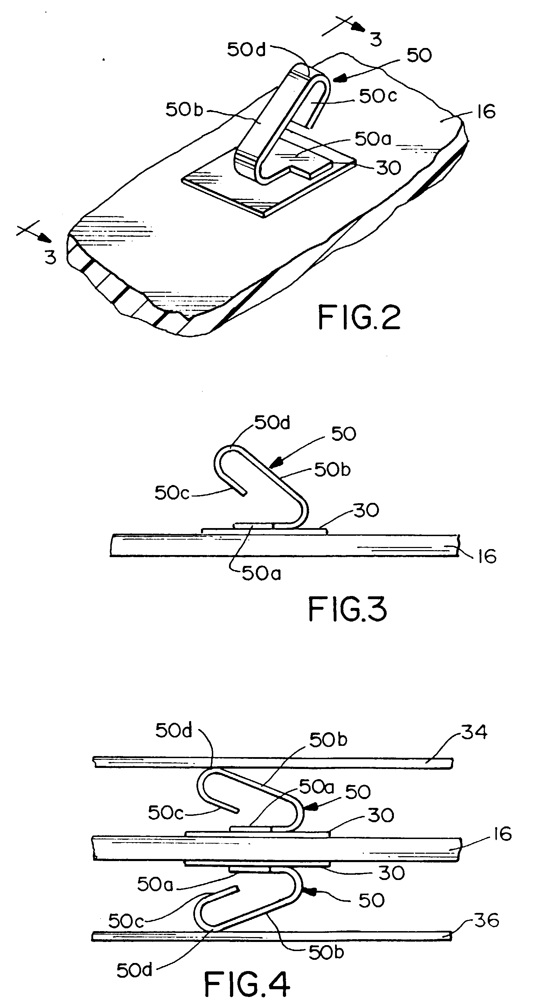

In a first embodiment of the invention, and referring first to Figures 2 and 3 in conjunction with Figure 1, each grounding terminal 50 includes a first end defining a generally flat base portion 50a which is soldered or otherwise mechanically secured to a respective ground pad 30. An arm portion 50b projects upwardly and back over base portion 50a in a cantilevered fashion, and the arm portion terminates in a second end which includes a reverse-bend lip or hook portion 50c and which defines a curved or rounded contact area 50d generally above base portion 50a and adapted to engage one of the cover members. The curved contact area 50d provides a high pressure connection between the ground circuit and the cover members and ensures an adequate grounding path therebetween.

The invention further contemplates that each grounding terminal 50 be a spring clip that is spring loaded between the circuit substrate and the respective cover member to provide a shock absorbing means for the circuit substrate. Therefore, the spring clips can be conveniently stamped and formed of sheet metal material so that arm portions 50b of the terminals are deflectable relative to base portions 50a which are secured to ground pads 30.

Figure 4 shows one grounding terminal 50 mounted on each opposite surface of circuit substrate 16. The grounding terminals, again, are secured to respective ground pads 30 of ground circuit 32. Cover members 34 and 36 are shown in assembled condition relative to substrate 16, whereby grounding terminals 50 are spring loaded and biased between the circuit substrate and the respective cover member. This can be seen by comparing grounding terminals 50 in their spring loaded condition shown in Figure 4 with the grounding terminals in their undeflected condition shown in Figures 2 and 3. As stated above, one or a plurality of the grounding terminals may be provided on one or both sides of the circuit substrate. By providing at least one grounding terminal on each side of the circuit substrate, an effective shock absorbing means can be provided.

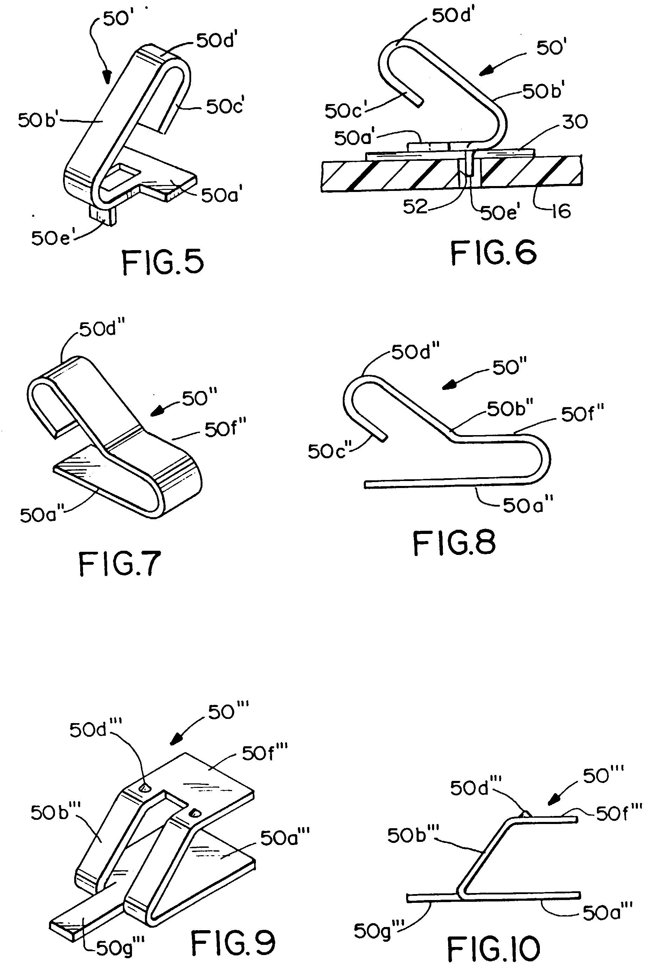

Figures 5 and 6 show a second embodiment of a grounding terminal 50' substantially equivalent to the grounding terminal shown in Figs. 1-4 but which includes a stabilizing leg 50e' for soldering or otherwise being retained within a hole 52 of circuit substrate 16. The leg provides increased mechanical retention of the grounding terminal with respect to the circuit substrate 16.

Referring now to Figures 7 through 10, two additional embodiments are shown which are adapted for automated assembly of an IC card or other circuit substrate assembly. Specifically, Figures 7 and 8 show a grounding terminal 50'' similar to grounding terminals 50 and 50' but with a horizontal section along a segment of arm portion 50b'' which defines a gripping surface 50f'' for picking and placing the grounding terminal by a vacuum or automated means, since an inclined surface would not easily be gripped by a standard downwardly extending vacuum head.

Similarly, Figures 9 and 10 show a fourth embodiment of a grounding terminal 50''' with a horizontal section which extends from contact area 50d''' and which defines a gripping surface 50f''' for picking and placing the grounding terminal by a vacuum head. Grounding terminal 50''' further includes a surface mount tab 50g''' adapted to be soldered to the surface of the circuit substrate for increased stability and retention of the grounding terminal to the circuit substrate.

During assembly of the IC card, due to the general shape of the grounding terminal, and specifically the relative positioning of the arm portion 50b with respect to the base portion 50a, the grounding terminal may be mounted to the substrate during the processing of the substrate without additional fixturing or secondary attachment components or methods. That is to say, grounding terminal 50 is stabilized by base portion 50a and can stand alone during reflow soldering of the substrate assembly. After assembly of the components to the electrical circuit of substrate 16 and, specifically, of grounding terminals 50 to ground pads 30, receptacle connector 12 is mounted to the circuit substrate and cover members 34 and 36 are assembled to the circuit substrate, about the receptacle connector, to bias grounding terminals 50 into their spring loaded condition. The cover members are secured together adhesively or by other appropriate means. IC card 10 then is in assembled condition for insertion into an appropriate mating electrical apparatus, such as a header connector of a known configuration (not shown), and conductive cover members 34 and 36 can engage a corresponding grounding element on the mating electrical apparatus. For instance, as is well known in the art, IC card 10 is insertable into a header connector with the side edges of the IC card riding within a pair of slots or channels facing inwardly at opposite sides of the header connector. It is known to provide grounding contacts within these channels and with which the conductive cover members may be engageable. Therefore, the ground circuit of circuit substrate 16 can be electrically connected through at least one grounding terminal, through the corresponding conductive cover members, and through the grounding contacts on the header connector to a ground circuit of the underlying electronic apparatus. In the alternative, or in addition to the above grounding arrangement, as discussed above, the ground circuit may include grounding traces 32 which are electrically coupled to ground pads 20a which, in turn, are engageable by receptacle ground terminals 18a and which are adapted to be electrically coupled to corresponding ground terminals on the mating header connector. In this arrangement, the ground circuit on the circuit substrate is therefore connected to the grounding circuit of the underlying apparatus through the mating interface of the IC card and the mating header connector, i.e. between the receptacle and header connectors. Note that the engagement of the receptacle ground terminals 18a to the corresponding ground terminals of the mating header connector should be made prior to the engagement of the input terminals 18 to the corresponding input terminals of the mating header connector so that electrically static charges may be discharged prior to mating the input connectors. To achieve this function, ground terminals 18a may be made longer than input terminals 18 so that the IC card is grounded to the mating header connector prior to engagement of the respective input terminals.

From the foregoing, it can be understood that grounding terminal 50 performs dual functions within the structure of IC card assembly 10, namely: (1) facilitating grounding of the IC card to remove static electrical charges therefrom and (2) providing a shock absorbing means for the circuit substrate. In addition, the grounding terminal may be located anywhere on the circuit substrate to increase design flexibility of the IC card assembly.

The present examples and embodiments, therefore, are to be considered in all respects as illustrative and not restrictive, and the invention is not to be limited to the details given herein.

## Claims

1. An IC card assembly for mating to a card-receiving connector, the assembly having an IC card, the IC card including
a circuit substrate (16) having an electrical circuit (26) printed on a surface thereof, the electrical circuit including a ground circuit (32),
a cover member (34, 36) mounted about the circuit substrate,
a grounding terminal (50) for providing a ground connection between the ground circuit and the card-receiving connector,
said grounding terminal including a cantilever beam having a first generally flat end (50a) mounted to the surface of the circuit substrate, a second generally curved end (50d) resiliently engaging a conductive portion of the cover member and providing a high pressure connection thereto,
and an arm section (50b) extending between said first end and said second end, said arm portion formed generally toward said first end so that the second end is located generally above the first end,
wherein the grounding terminal (50) electrically couples the ground circuit to the cover member.

2. An IC card assembly as set forth in claim 1 wherein said grounding terminal comprises a spring clip that is spring loaded between the circuit substrate and the cover member to provide a shock absorbing means for the circuit substrate.

3. An IC card assembly as set forth in claim 1, wherein the cover member is substantially entirely formed of a conductive material.

4. An IC card assembly as set forth in claim 1 further comprising a segment of the ground circuit located on opposed surfaces of the circuit substrate, wherein a grounding terminal is provided on each surface for coupling the ground circuit to the cover member on the respective surface of the circuit substrate.

5. An IC card assembly as set forth in claim 4 wherein each grounding terminal comprises a spring clip that is spring loaded between the circuit substrate and the respective cover member to provide shock absorber means for the circuit substrate.

6. An IC card assembly as set forth in claim 1, including a plurality of grounding terminals on the one surface of the circuit substrate.

7. An IC card assembly which includes a generally planar circuit substrate (16) with at least one electrical component (24) mounted thereon, a receptacle connector (12) mounted near an edge of the circuit substrate, and a pair of cover members (34, 36) mounted about opposed surfaces of the circuit substrate,
at least a portion of one of said cover members being of conductive material for engaging a corresponding ground contact on a mating electrical apparatus,
a ground circuit (32) on one surface of the circuit substrate adjacent the conducting portion of the one cover member, and
a generally C-shaped grounding terminal (50) coupled between the ground circuit and the conductive portion of the one cover member,
said grounding terminal including a cantilever beam having a first generally flat end (50a) mechanically coupled to a portion of the ground circuit, a second generally curved end (50d) resiliently engaging the conductive portion of the one of said cover members and providing a high pressure connection thereto,
and an arm section (50b) extending between said first end and said second end, said arm portion formed generally toward said first end so that the second end is located generally above the first end.

8. An IC card assembly as set forth in claim 7 wherein said grounding terminal (50) comprises a spring clip that is spring loaded between the circuit substrate and the conductive cover member to provide a shock absorbing means for the circuit substrate.

9. An IC card assembly as set forth in claim 7 wherein at least a portion of both of said cover members are of conductive material, and including a segment of the ground circuit on each opposite surface of the circuit substrate, and wherein one of said grounding terminals is provided on each surface for coupling the ground circuit to the respective conductive portions of the cover members.

10. An IC card assembly as set forth in claim 7, including a plurality of said grounding terminals on said one surface of the circuit substrate.

11. An IC card assembly as set forth in claim 7, wherein said first end defines a base portion (50a) mounted on a grounding pad (30) of the ground circuit, said second end defines a curved contact area and a reverse bend hook portion (50c), and said arm portion extends between said first and second ends at an acute angle relative to said base portion.

12. An IC card assembly as set forth in claim 11, wherein the grounding terminal further comprises stabilizing means (50e') formed in said base portion for increased stability and retention of the grounding terminal with respect to the circuit substrate

13. An IC card assembly as set forth in claim 12, wherein said stabilizing means comprises a downwardly projecting stabilizing leg adapted to be secured within a corresponding hole in the circuit substrate.

14. An IC card assembly as set forth in claim 13, wherein said stabilizing means comprises a surface mount tab adapted to be secured to the surface of the circuit substrate.

15. An IC card assembly as set forth in claim 7, wherein said arm portion includes a substantially horizontal section therealong which provides a gripping surface for a vacuum nozzle.

## Patentansprüche

1. IC-Kartenanordnung passend zu einem die Karte aufnehmenden Steckverbinder, wobei die Anordnung eine IC-Karte mit folgenden Merkmalen aufweist:
ein Schaltungssubstrat (16) mit einer, auf dessen eine Seite gedruckten elektrischen Schaltung (26), wobei die elektrische Schaltung eine Erdungsschaltung (32) beinhaltet,
eine, um das Schaltungssubstrat herum angebrachte Abdeckung (34, 36),
ein Erdungsanschluß (50) zum Bereitstellen einer Erdungsverbindung zwischen der Erdungsschaltung und dem die Karte aufnehmenden Steckverbinder sowie mit folgenden Merkmalen:
ein freitragender Arm weist ein erstes auf der Oberfläche von dem Schaltungssubstrat angebrachtes, im allgemeinen flaches Ende (50a) sowie ein zweites im allgemeinen gebogenes Ende (50d) auf, welches einen leitfähigen Bereich der Abdeckung federnd berührt und dazu eine Verbindung mit einem hohen Anpreßdruck bereitstellt;
ein Abschnitt (50b) des Armes erstreckt sich zwischen dem ersten Ende und dem zweiten Ende, wobei der Abschnitt des Armes im allgemeinen in Richtung auf das erste Ende geformt ist, so daß das zweite Ende im allgemeinen oberhalb des ersten Endes gelegen ist;
der Erdungsanschluß (50) verbindet die Erdungsschaltung mit der Abdeckung elektrisch miteinander.

2. IC-Kartenanordnung gemäß Anspruch 1, bei der der Erdungsanschluß eine Federklammer umfaßt, die zwischen dem Schaltungssubstrat und der Abdeckung unter Federspannung steht, um eine stoßdämpfende Einrichtung für das Schaltungssubstrat bereitzustellen.

3. IC-Kartenanordnung gemäß Anspruch 1, bei der die Abdeckung im wesentlichen gänzlich aus einem leitfähigen Material gebildet ist.

4. IC-Kartenandordnung gemäß Anspruch 1, die weiterhin einen Abschnitt der Erdungsschaltung umfaßt, der auf gegenüberliegenden Seiten des Schaltungssubstrats gelegen ist, wobei ein Erdungsanschluß auf jeder Seite bereitgestellt wird, um die Erdungsschaltung mit der Abdeckung auf der jeweiligen Seite des Schaltungssubstrats zu koppeln.

5. IC-Kartenanordnung gemäß Anspruch 4, bei der jeder Erdungsanschluß eine Federklammer umfaßt, die zwischen dem Schaltungssubstrat und dem jeweiligen Abdeckungselement unter Federspannung steht, um eine stoßdämpfende Einrichtung für das Schaltungssubstrat bereitzustellen.

6. IC-Kartenanordnung gemäß Anspruch 1, die eine Vielzahl von Erdungsanschlüssen auf der einen Seite des Schaltungssubstrats enthält.

7. IC-Kartenanordnung mit folgenden Merkmalen:
ein im wesentlichen ebenes Schaltungssubstrat (16) mit zumindest einem darauf angebrachten elektrischen Bauteil (24),
eine Steckbuchse (12), die benachbart einer Kante des Schaltungssubstrats angebracht ist, und zwei Abdeckungselemente (34, 36), die um gegenüberliegende Seiten des Schaltungssubstrats herum angebracht sind;
zumindest ein Bereich des einen der Abdeckungselemente besteht aus leitfähigem Material, das zur Anlage an einem entsprechenden Erdungskontakt einer passenden elektrischen Vorrichtung dient;
eine Erdungsschaltung (32) ist auf einer Seite des Schaltungssubstrats benachbart dem leitfähigen Bereich des einen Abdeckungselements angeordnet und ein im allgemeinen C-geförmiger Erdungsanschluß (50) ist zwischen der Erdungsschaltung und dem leitfähigen Bereich des einen Abdeckungselements angeschlossen;
der Erdungsanschluß beinhaltet einen freitragenden Arm, der ein erstes, mit einem Bereich der Erdungsschaltung mechanisch gekoppeltes, im allgemeinen flaches Ende (50a) sowie ein zweites im allgemeinen gebogenes Ende (50d) besitzt, welches den leitfähigen Bereich des einen der Abdeckungselemente federnd berührt und dazu eine Verbindung mit einem hohen Anpreßdruck bereitstellt;
ein Abschnitt (50b) des Arms erstreckt sich zwischen dem ersten Ende und dem zweiten Ende, wobei der Abschnitt des Arms im allgemeinen in Richtung auf das erste Ende geformt ist, so daß das zweite Ende im allgemeinen oberhalb des ersten Endes gelegen ist.

8. IC-Kartenanordnung gemäß Anspruch 7, bei der der Erdungsanschluß (50) eine Federklammer umfaßt, die zwischen dem Schaltungssubstrat und dem leitfähigen Abdeckungselement unter Federspannung steht, um eine stoßdämpfende Einrichtung für das Schaltungssubstrat bereitzustellen.

9. IC-Kartenanordnung gemäß Anspruch 7, bei der zumindest ein Bereich beider Abdeckungselemente aus leitfähigem Material besteht, und die einen Abschnitt der Erdungsschaltung auf jeder gegenüberliegenden Seite des Schaltungssubstrats enthält, und bei der einer der Erdungsanschlüsse, auf jeder Oberfläche zum Koppeln der Erdungsschaltung mit den jeweiligen leitfähigen Bereichen der Abdeckungselemente vorgesehen ist.

10. IC-Kartenanordnung gemäß Anspruch 7, die eine Vielzahl von solchen Erdungsanschlüssen auf der einen Oberfläche des Schaltungssubstrats enthält.

11. IC-Kartenanordnung gemäß Anspruch 7, bei der das erste Ende einen Basisabschnitt (50a) definiert, der auf einem Erdungsanschlußfleck (30) der Erdungsschaltung befestigt ist, das zweite Ende einen gebogenen Kontaktbereich und einen rückgebogenen Hakenabschnitt (50c) definiert und sich der Armabschnitt zwischen dem ersten und dem zweiten Ende in einem spitzen Winkel relativ zu dem Basisabschnitt erstreckt.

12. IC-Kartenanordnung gemäß Anspruch 11, bei der der Erdungsanschluß weiterhin eine in dem Basisabschnitt ausgebildete Stabilisierungsvorrichtung (50e') umfaßt, und zwar wegen erhöhter Stabilität und Zurückhaltens des Erdungsanschlusses in Bezug auf das Schaltungssubstrat.

13. IC-Kartenanordnung gemäß Anspruch 12, bei der diese Stabilisierungsvorrichtung ein nach unten überstehendes, angepaßtes Stabilisierungsbein umfaßt, um in einem entsprechenden Loch in dem Schaltungssubstrat gesichert zu werden.

14. IC-Kartenanordnung gemäß Anspruch 13, bei der diese Stabilisierungsvorrichtung eine an der Oberfläche zu befestigende Lötfahne umfaßt, um an der Oberfläche des Schaltungssubstrats befestigt zu werden.

15. IC-Kartenanordnung gemäß Anspruch 7, bei der dieser Abschnitt des Arms an einem Ende einen im wesentlichen horizontalen Abschnitt beinhaltet, der eine Greiffläche für eine Saugdüse bereitstellt.

## Revendications

1. Ensemble carte de circuit intégré pour accouplement avec un connecteur de réception de carte, l'ensemble comportant une carte de circuit intégré, la carte de circuit intégré comprenant :
un substrat de circuit (16) comportant un circuit électrique (26) imprimé sur l'une de ses faces, le circuit électrique incluant un circuit de masse (32) ;
un élément enveloppe (34, 36) monté autour du substrat de circuit ;
une borne de mise à la masse (50) pour réaliser une connexion de masse entre le circuit de masse et le connecteur de réception de carte ;
ladite borne de mise à la masse incluant une barrette en porte-à-faux ayant une première extrémité globalement plate (50a) montée sur la surface du substrat de circuit, une seconde extrémité globalement incurvée (50d) contactant de manière élastique une partie conductrice de l'élément enveloppe et réalisant avec celui-ci une connexion à forte pression ;
et une section bras (50b) s'étendant entre ladite première extrémité et ladite seconde extrémité, ladite partie bras étant formée globalement en direction de ladite première extrémité de façon telle que la seconde extrémité soit située globalement au-dessus de la première extrémité ;
dans lequel la borne de mise à la masse (50) relie électriquement le circuit de masse à l'élément enveloppe.

2. Ensemble carte de circuit intégré selon la revendication 1, dans lequel ladite borne de mise à la masse comprend une épingle à ressort qui est comprimée entre le substrat de circuit et l'élément enveloppe pour former un moyen d'absorption de choc pour le substrat de circuit.

3. Ensemble carte de circuit intégré selon la revendication 1, dans lequel l'élément enveloppe est sensiblement entièrement formé d'une matière conductrice.

4. Ensemble carte de circuit intégré selon la revendication 1, comprenant en outre un segment du circuit de masse situé sur les faces opposées du substrat de circuit, dans lequel une borne de mise à la masse est disposée sur chaque face pour raccorder le circuit de masse à l'élément enveloppe sur la face respective du substrat de circuit.

5. Ensemble carte de circuit intégré selon la revendication 4, dans lequel chaque borne de mise à la masse comprend une épingle à ressort qui est comprimée entre le substrat de circuit et l'élément enveloppe respectif pour former un moyen d'absorption de choc pour le substrat de circuit.

6. Ensemble carte de circuit intégré selon la revendication 1, incluant plusieurs bornes de mise à la masse sur la première face du substrat de circuit.

7. Ensemble carte de circuit intégré qui comprend un substrat de circuit globalement plan (16) portant au moins un composant électrique (24), un socle de connecteur (12) monté près d'un bord du substrat de circuit et une paire d'éléments enveloppes (34, 36) montés autour des faces opposées du substrat de circuit ;
au moins une partie de l'un desdits éléments enveloppes étant faite d'une matière conductrice pour contacter un contact de masse correspondant sur un dispositif électrique qui s'y accouple ;
un circuit de masse (32) sur une face du substrat de circuit adjacente à la partie conductrice dudit un élément enveloppe ; et
une borne de mise à la masse globalement en forme de C (50) raccordée entre le circuit de masse et la partie conductrice dudit un élément enveloppe ;
ladite borne de mise à la masse comprenant une barrette en porte-à-faux ayant une première extrémité globalement plate (50a) raccordée mécaniquement à une partie du circuit de masse, une seconde extrémité globalement incurvée (50d) contactant élastiquement la partie conductrice dudit un desdits éléments enveloppes et réalisant avec celle-ci une connexion à forte pression ;
et une section bras (50b) s'étendant entre ladite première extrémité et ladite seconde extrémité, ladite partie bras étant formée globalement en direction de ladite première extrémité de façon telle que la seconde extrémité soit située globalement au-dessus de la première extrémité.

8. Ensemble carte de circuit intégré selon la revendication 7, dans lequel ladite borne de mise à la masse (50) comprend une épingle à ressort qui est comprimée entre le substrat de circuit et l'élément enveloppe conductrice pour former un moyen d'absorption de choc pour le substrat de circuit.

9. Ensemble carte de circuit intégré selon la revendication 7, dans lequel au moins une partie des deux dits éléments enveloppes est faite d'une matière conductrice, et comprenant un segment du circuit de masse sur chaque face opposée du substrat de circuit, et dans lequel l'une desdites bornes de mise à la masse est disposée sur chaque face pour raccorder le circuit de masse aux parties conductrices respectives des éléments enveloppes.

10. Ensemble carte de circuit intégré selon la revendication 7, incluant plusieurs bornes de mise à la masse sur ladite première face du substrat de circuit.

11. Ensemble carte de circuit intégré selon la revendication 7, dans lequel ladite première extrémité définit une partie base (50a) montée sur une plage de mise à la masse (30) du circuit de masse, dans lequel ladite seconde extrémité définit une zone de contact incurvée et une partie crochet recourbée en sens inverse (50c), et dans lequel ladite partie bras s'étend entre lesdites première et seconde extrémités suivant un angle aigu par rapport à ladite partie base.

12. Ensemble carte de circuit intégré selon la revendication 11, dans lequel la borne de mise à la masse comprend, en outre, un moyen de stabilisation (50e') formé dans ladite partie base pour augmenter la stabilité et le maintien de la borne de mise à la masse par rapport au substrat de circuit.

13. Ensemble carte de circuit intégré selon la revendication 12, dans lequel ledit moyen de stabilisation comprend une jambe de stabilisation en saillie vers le bas, conçue pour se fixer à l'intérieur d'un trou correspondant du substrat de circuit.

14. Ensemble carte de circuit intégré selon la revendication 13, dans lequel ledit moyen de stabilisation comprend une patte de montage en surface conçue pour se fixer à la surface du substrat de circuit.

15. Ensemble carte de circuit intégré selon la revendication 7, dans lequel ladite partie bras comprend une section sensiblement horizontale sur toute sa longueur qui procure une surface de prise pour une buse de succion.
